# EUROPEAN PATENT SPECIFICATION

(11) **EP 2 489 241 B1**
(45) Date of publication and mention of the grant of the patent: **03.06.2015**
(21) Application number: 10766042.5
(22) Date of filing: 14.10.2010
(51) Int. Cl.: H05B 33/08

(54) **PHASE CUT DIMMING OF LEDS**
PHASENSCHNITTVERDUNKLUNG VON LEDS
GRADATION D'INTENSITÉ DE DEL PAR COUPURE DE PHASE

(30) Priority: 14.10.2009 AT 64109 U
(43) Date of publication of application: 22.08.2012
(73) Proprietor: Tridonic UK Limited, Hampshire RG24 8LB (GB)
(72) Inventor: WILSON, Ian, Sunderland Tyne and Wear SR3 3RH (GB); FRANKLAND, James, Richmond North Yorkshire DL10 6SL (GB); STEVENS, Frederick, Spennymoor DL16 7LE (GB)
(74) Representative: Rupp, Christian
(86) International application number: PCT/EP2010/065411
(87) International publication number: WO 2011/045371

(56) References cited:
- WO-A1-2005/115058
- WO-A1-2009/121956
- US-A1- 2007 182 347
- US-A1- 2009 184 662
- RAND D ET AL: "Issues, Models and Solutions for Triac Modulated Phase Dimming of LED Lamps", POWER ELECTRONICS SPECIALISTS CONFERENCE, 2007. PESC 2007. IEEE, IEEE, PISCATAWAY, NJ, USA, 17 June 2007 (2007-06-17), pages 1398-1404, XP031218489, ISBN: 978-1-4244-0654-8

## Description

The present invention generally relates to the field of dimming LED lighting means using phase cut dimming.

### Technical area

In order to save energy, today energy saving lamps are often used. With the introduction of efficient light emitting diodes (LED) as potential light sources there is also a demand for energy saving lamps using LED which have the ability to be dimmed. Such systems have to provide the functionality of a dimming interface, particularly for the use with phase dimmers. There are several types of dimmers generally available. Those employing triac or thyristor devices operate in a very similar fashion. Both act as high-speed switches and in a dimmer are used to control the amount of electrical energy passing to a lamp. They do this by 'chopping' the sinusoidal mains voltage waveform.

A trigger or firing pulse dictates at what point the device starts to conduct. The later the device is fired the later it starts to conduct and hence less power is transmitted to the load.

### State of the art

Various circuit arrangements have been proposed which shall add the functionality of dimming to LED based light sources.

One example would be the EP 1016062 B1, where LEDs can be controlled by means of a digital bus, e.g. by DMX.

The main problem is the compatibility of a common triac dimmer in use with a LED driver circuit and to provide a dimming signal according to the control of the phase dimmer. So it is the main focus of the invention to provide a method and a circuitry to solve this problem.

WO 2005/115058 A1 refers to a dimming circuit for a LED lighting device. The dimming circuit comprises a dummy load, wherein as soon as a voltage is lower than a certain threshold, a current is drawn through that dummy load, wherein the dummy load is controlled at exactly the same frequency of a supply voltage.

XP 031218489 refers to a triac modulated phase dimming of LED lamps. In particular, a RMS (Rout Mean Square) value of a phase modulated, chopped AC voltage is computed and compared with a nominal RMS value when there is no dimming. Further, a RMS detection block is an input to a DC/DC converter. Further, an output of a rectifier is a input to the DC/DC converter.

US 2007/0182347 A1 refers to an impedance matching circuit for current regulation of solid state lighting. The impedance matching circuit comprises a first resistor coupled to receive a first current from the electronic load, a second resistor and a switch coupled in series to the second resistor, the switch responsive to a control voltage to modulate a second current through the second resistor in response to a detected level of the first current through the first resistor.

US 2009/0184662 A1 refers to dimming signal generation and methods of generating dimming signals. A lighting control circuit comprises a dimming level detection circuit configurable to generate a first voltage level signal corresponding to a selected one of at least two different types of dimming signals, the types of dimming signals comprising at least two of an alternating current (AC) phase cut dimming signal, a direct current (DC) voltage level dimming signal or a pulse-width modulated (PWM) dimming signal, a waveform generator configured to output a waveform generator periodic waveform and a comparator circuit configured to compare the waveform generator periodic waveform with the first voltage level signal to generate a comparator waveform having a comparator duty cycle corresponding to a dimming level of the one of the at least two different input dimming signals and a frequency corresponding to a frequency of the waveform generator periodic waveform.

WO 2009/121956 A1 teaches a constant current source which is selectively activated when the amplitude of a AC voltage supply falls below a given threshold, such activating a dummy load during these periods. This approach is called "bleeding" and a circuit which activates a dummy load in order to draw an additional current from a constant current source, when the input AC voltage level falls below a given threshold voltage, is called a "bleeding circuit".

The present invention proposes an improved solution for dimming LEDs based on a phase cut manipulation of an AC supply voltage of an operating means ("ballast") for one or more LEDs, OLEDs or any other lighting means which are comparable as to their electrical characteristics.

This object is achieved by means of the features of the independent claims. The dependent claims develop further the central idea of the invention.

A first aspect of the invention relates to a dimmable LED module, the module being designed for being dimmed using a dimmer controlling a phase cut of an AC supply voltage supplied to the LED module, the module comprising:
- a bleeding circuit designed for selectively acting to draw a bleeding current in periods when the supply voltage amplitude is below a threshold value, and
- a control circuit adapted to enable/disable the bleeding circuit with a frequency which is higher than twice the frequency of the AC supply voltage.

The control circuit may be designed to enable the bleeding circuit with pulses and wherein the control circuit is designed to detect the position of any phase cut of the AC supply voltage by processing one or more samples of a bleeding activity signal, the sample(s) of the bleeding activity signal beinig gathered during a pulse enabling to the bleeding circuit, the bleeding activity signal indicating an activity of the bleeding circuit.

The control circuit may be designed to gather a first number of bleeding activity samples during a first half wave of the AC supply voltage, while it gathers a second number, smaller than the first number and preferably being 1, in at least one second half wave, immediately following the first half wave or not.

Further, the control circuit may be supplied with the bleeding activity signal indicating the activity of the bleeding circuit, the control circuit being designed to determine, based on the bleeding activity signal, a value representing the phase cut present in the AC supply voltage and issuing a control signal as a function of the value representing the phase cut present in the AC supply voltage, and at least one driver circuit being supplied with said control signal and adapted to adjust the power supplied associated LED lighting means.

The bleeding activity signal can indicate directly or indirectly one of the bleeding current or a voltage across resistive means of the bleeding circuit.

The bleeding activity signal can further be a pulse signal.

The control circuit may be designed to determine the pulse width of the bleeding activity indication signal.

The bleeding activity signal may be produced for every cycle of the mains voltage or periodically.

The control circuit may be designed to obtain, based on the bleeding activity signal, the timing of the zero-crossings of the AC supply voltage as well as the timing of any phase cut of the AC supply voltage. +

The LED module may comprise a driver circuit controlling the power of the LED lighting means via one or more of:
- low frequency PWM control, the PWM pulses having a frequency in the order of twice the frequency of the AC supply voltage, preferably with a frequency between 90 and 140 Hz, the PWM pulses being preferably synchronous with the bleeding activity indication signal,
- high frequency PWM control, the PWM pulses having a frequency of more than 200Hz, preferably more than 500Hz, and/or
- a control of an amplitude of a DC current through the LED lighting means.

The supply potential of the LED lighting means may be isolated from the supply voltage by isolating means, such as e.g. an opto-coupler. The control circuit may be connected to the potential of the primary side or the secondary side of the isolating means.

A still further aspect of the invention relates to a retrofit LED lamp, comprising a LED module as defined above.

Yet a further aspect of the invention relates to a method for operating a dimmable LED module, the module being dimmed using a dimmer controlling the phase of an AC supply voltage supplied to the LED module, such as e.g. a dimmer having a triac, wherein:
- a bleeding circuit of the LED module selectively acts draw a bleeding current in periods when the supply voltage amplitude is below a threshold value,
- wherein the bleeding circuit is enabled/disabled with a frequency which is higher than twice the frequency of the AC supply voltage.

The enabling/disabling of the bleeding circuit may be performed by pulses, preferably PWM pulses, modulating a switch of the bleeding circuit.

Further features, advantages and objects of the present invention will become evident from the following detailed description of preferred embodiments of the invention, when taken in conjunction with the figures of the enclosed drawings.
Figure 1 shows a first embodiment of a dimmable ballast for LED lighting means,
Figure 2 shows a first embodiment of a dimmable ballast for LED lighting means,
Figure 3 shows in detail a first embodiment of a bleeding circuit of the invention,
Figure 4 shows in detail a second embodiment of the invention,
Figure 5 illustrates the output signal of a leading edge dimmer and the corresponding bleeding current detection signal at Rₛₕᵤₙₜ, and
Figure 6 shows in detail a third embodiment of the invention.

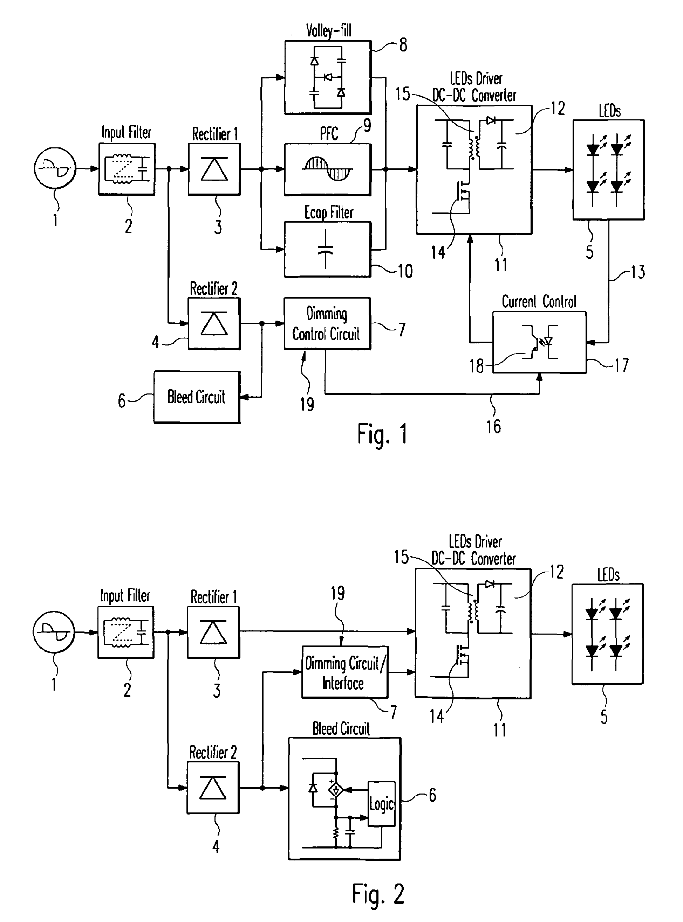

With reference to Fig. 1 now a first embodiment of a dimmable ballast for LED lighting means will be described. According to this first embodiment a secondary side control (regulation) for the LED power is proposed.

Note that 'primary side' and 'secondary side' relates to the primary side and secondary side, respectively, of an isolating means separating the potential of the LED lighting means from the supply voltage, as will be explained later on in the detail.

As can be seen from Fig. 1, an AC supply voltage 1, such as for example a AC mains voltage of a frequency of 50Hz or 60Hz and a RMS voltage of 120V or 230V, is supplied to an input filter 2 of the ballast.

As schematically shown in Fig. 1, the AC supply voltage may be phase-cut, e.g. by a dimmer operated manually by a user, the dimmer comprising a Triac or Thyristor for the phase-cut. The time duration of the phase cut represents a dimming command.

The output signal, i.e. the filtered AC supply voltage of the input filter 2 is then supplied both to a first rectifier 3 and a second rectifier 4.

The first rectifier 3 is provided in order to transmit the power to the LED lighting means 5.

The second rectifier 4 is provided in order to feed a bleeding circuit 6 and a dimming control circuit 7.

Note that it is also possible to provide only a single rectifier both for the power transmission to the LED lighting means 5 and for the bleeding circuit 6.

The bleeding circuit according to the present invention has one or more, preferably all of the following functions:
i. To act as a load at the AC supply (e.g.) mains input and prevent supply voltage leakage currents (as across gas discharge lamps etc.) from raising the input voltage to the driver circuit and causing retrigger and light flicker when the driver is switched off.
ii. To enable the input voltage to follow more accurately the phase cut of the supply voltage via the triac. Since the average rectified voltage or bus voltage is often used to control the system this is important to avoid errors. Without the activity of the bleeding circuit the voltage can drift up especially with leakage currents across dimmers or switches.
iii. To support the triac holding current at point of switching.
iv. To damp ringing behaviour inside the dimmer and between the dimmer and the input RFI filter of the converter.
v. To support the detection dimming information from leading and trailing edge dimmers.

The output of the first rectifier 3, i.e. the filtered and rectified AC supply voltage, can be optionally supplied to
- a valley-fill circuitry 8 (e.g. an active valley fill circuitry, a passive valley fill circuitry or a combined active-passive valley fill),
- an actively switched PFC circuit 9 (wherein a switch of the PFC circuit is controlled by a control circuit receiving at least one input signal), or
- a filter circuit 10 comprising e.g. an electrolyte capacitor.

The thus processed rectified and filtered supply voltage is then supplied to the LED driver 11 having a DC/DC converter such as for example a flyback converter 12, especially a quasi-resonant flyback converter. Note that other isolated or non-isolated DC/DC converters can be used. The isolation can also be outside the DC/DC converter. The dimmable LED module may also be non-isolated, as it may comprise a non-isolated buck-converter as DC/DC converter.

The LED driver 11 supplies the LED lighting means 5 with a regulated (feedback-controlled) power.

As schematically shown in Fig. 1, the LED lighting means 5 can present a plurality of LEDs (or OLEDs, or other lighting means with comparable electrical characteristics) can be connected in series and/or in parallel.

A feedback signal 13 indicating e.g. the current trough the LED lighting means is fed back to the LED driver 11. The LED driver in the shown example, being a flyback converter 12, has a primary side switch 14. By adapting the clocking of the switch 14 the power supplied to the LED lighting means can be controlled such that the measured value of the feedback signal 13 is controlled to be close if not identical to a nominal value.

It may be possible to set the LED via calibration and to accept an open loop method to run the LED. The modification of the electrical power supplied to the LED lighting means could be done by change of amplitude of the LED current or just by burst operation, according to phase dimmer signal derived by the bleeding circuitry.

Generally speaking, the Dc/DC converter has at least one control input for modifying the electrical power supplied to the LED lighting means 5.

The potential of the LED lighting means 5 may be galvanically isolated from the AC supply voltage 1. In the shown example, this isolation is actually implemented by means of the transformer 15 of the AC/DC converter 12.

The current control e.g. via the switch 14 of the DC/DC converter 12 is performed as controlled by an output signal 16 of the dimming control circuit 7. The dimming control circuit 7 thus supplies, via the signal 16, a nominal value for the LED lighting means power.

A control circuit 17 actually drives e.g. the switch 14 of the LED driver 11 depending on the measured feedback signal 13 and the controlled (nominal value) signal 16 of the dimming control circuit 7.

As schematically shown via the reference numeral 18, the dimming control circuit 7 is isolated e.g. by an optocoppler 18 from the potential of the LED lighting means 5, as in the present example the dimming control circuit 7 is not isolated from the AC supply voltage 1. As it may not be necessary to isolate the dimming control circuit 7 from the potential of the LED lighting means 5, the dimming control circuit 7 could also be directly linked to the secondary side, e.g. the LED driver 11.

The embodiment of fig. 1 is called a secondary side regulation as the power (current) control of the LED lighting means 5 is performed on the secondary side of the isolating means 15.

The alternative embodiment of fig.2 implements the concept of a primary side regulation. Again, the AC supply voltage is supplied to an input filter 2 and then to a burst rectifier 3 in a second rectifier 4. The output of the first rectifier 3 is again, in this embodiment, is directly supplied to the LED driver 11. Preferably, also the LED driver 11 has isolating means 15 such as for example the illustrated transformer.

The output of the second rectifier 4 is again both forwarded to a bleeding circuit 6 and a dimming control circuit/interface 7. It is to be understood that the term "interface" refers to the fact that this circuit can receive external dimming signals from a bus, wirelessly (e.g. IR), etc., which external input is schematically designated to the reference numeral 19. This obviously also applies to the embodiment of fig. 1.

In the embodiment of fig. 2, as a primary side regulation is carried out, the dimming circuit/interface 7 controls the LED driver 11 e.g. by driving the switch 14 on the primary side of the converter 11.

For the primary side regulation (fig. 2) or a secondary side regulation (fig.1) different options to modulate the power of the LED lighting means 5 can be used.

A first example is the modulation of the DC level of the current through the LED lighting means 5.

A second option is a high frequency PWM control, wherein "high frequency" is to be understood that the resulting current pulses through the LED lighting means 5 have a frequency which is higher than the frequency of the rectified AC input voltage. In the case of an AC mains voltage supply, thus the high frequency PWM pulses will have a frequency of more than 120 Hz.

A third option is low frequency PWM control of the power dissipated by the LED lighting means 5, wherein "low frequency" is to be understood that the low frequency PWM pulses of the current through the LED 5 a frequency in the order of the rectified supply voltage, e.g. 100 Hz or 120 Hz.

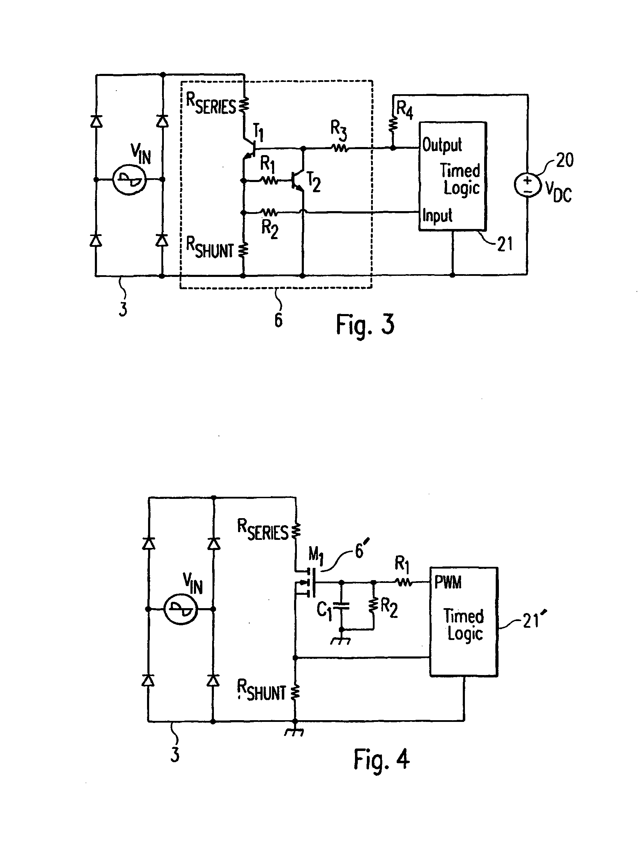

Fig. 3 shows in detail a preferred embodiment for the bleeding circuit 6 supplied by the filtered AC supply voltage, which is rectified (diode bridge 3) before being supplied to the bleeding circuit 6.

The bleeding circuit 6 according to this embodiment is provided with a constant current source comprising a transistor T2, which is controlled by the base-emitter voltage of T2.

A time logic unit 21 has an output which preferably through a digital signal, can switch a transistor T1 in order to activate a bleed current flowing through a first resistor Rₛₑᵣᵢₑₛ, the transistor T1 (when switched on) and a measurement shunt Rₛₕᵤₙₜ.

Via the base-emitter voltage V_{BE} of a second transistor T₂ the amplitude of the bleed current can be controlled, e.g. to a range of between 10-50mA, preferably 20-30mA.

The time logic unit can be e.g. a microcontroller, an ASIC, or an hybrid thereof.

The time logic unit 21 senses the resulting bleed current at an input pin of the time logic unit 21.

Typically, the bleed current is activated by the timed logic unit for periods in which the input voltage (supply voltage) is low and e.g. has an amplitude of less than 30Vpk. Thus, the timed logic unit, once synchronized with the AC supply voltage, enables the bleeding circuit in these low voltage periods (around the zero crossings) and then detects the activity of the enabled bleeding circuit.

Therefore, the current pulses will be detected at Rₛₕᵤₙₜ near the zero crossings of the AC supply voltage, and furthermore different bleeding current pulses will be sensed by Rₛₕᵤₙₜ at the input of the time logic unit when the triac in the manually operated dimmer switches on. During the phase cut period of the AC supply voltage, the supply voltage amplitude will be low and the only current drawn through Rₛₕᵤₙₜ is the quiescence current necessary to supply (hold) the dimmer electronics, i.e. the electronics in the manually operated dimmer outside the LED lighting ballast.

Note that in the shown example the bleed activity is sensed by measuring the bleed current, as especially timings and/or widths of the bleed current pulses. The width serves as a discrimination criterion for pulses having differing causes.

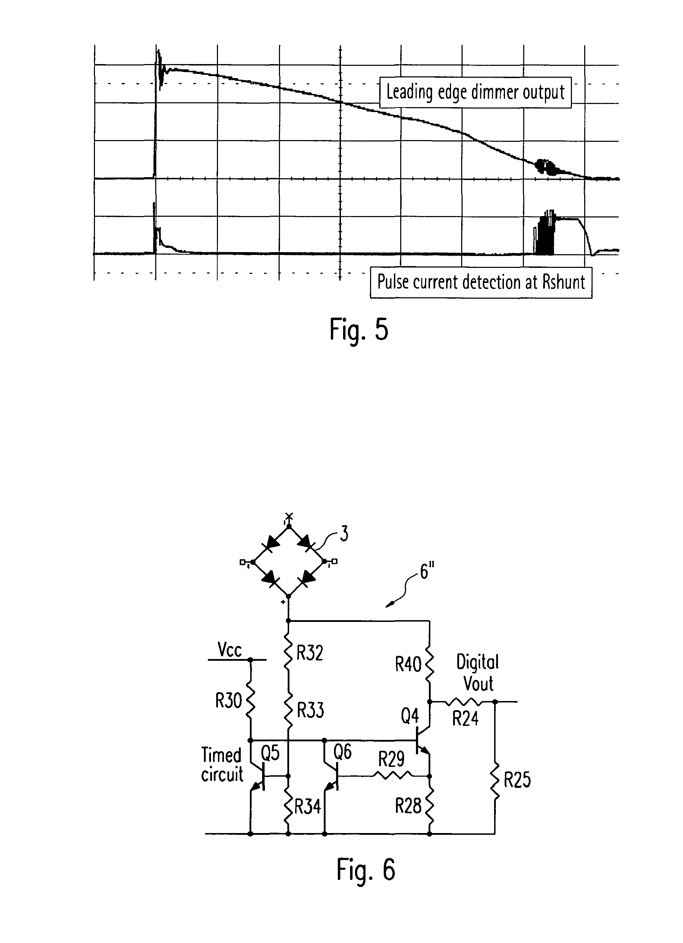

The activity of the bleeding circuit, however, alternatively or even additionally can also be sensed on the mains voltage line. Such an example will be described as one variant of Fig. 6 later on.

Fig. 4 shows a further possible implementation of a bleeding circuit 6' according to the present invention.

According to this embodiment the timed logic unit 21' activates the bleed current outputting a PWM signal, which is filtered through a RC filter circuitry (C1, R2) to control e.g. a MOSFET switch M1 to the conducting state.

Again, resulting bleed current is measured using a measurement shunt Rₛₕᵤₙₜ and is supplied to an input pin of the timed logic unit 21'.

Fig. 5 shows an illustration of the leading edge dimmer output signal (upper view) and the corresponding pulse current detection at the shunt Rₛₕᵤₙₜ.

A trailing or leading edged detection algorithm can be divided in the LED ballast deriving the timing of the phase cut from the current pulse information by looking at the pulse width or the timing of the pulses to compute the timing of the zero crosses of the AC supply voltage as well as the operating frequency of the AC supply voltage. The narrower current pulses indicate the position of the phase cut. This detection of the broad current pulses (bleed current) and the narrow pulses (art of the phase cut by the triac or thermistor in the dimmer), respectively, can be performed by the timed logic unit 21, 21'.

Thus, using the current information from the bleeding circuit 6, 6' the phase cut timing of the dimmer can be detected. Thus, the detected phase cut can be used as a dim control information and can be "translated" in different manners (see above: modulation of DC current through the LED lighting means, high frequency PWM or low frequency PWM).

In the simplest manner, e.g. the low frequency PWM control of the LED lighting means 5, the operation of the DC/DC converter 11 is stopped during the detected phase cut.

In case a trailing edged detection algorithm shall be implemented there is the problem that when the dimmer switches off its MOSFET or equivalent there is often insufficient load on the dimmer to enable its output to follow the phase cut information and therefore bleeding current pulses will not occur if the voltage does not fall below 30 Vpk. In order to accurately detect the phase timing information the bleed current can be activated using an active or adaptive method. An example would be that the bleed current is activated continuously for one or several cycles of the AC supply voltage to enable the timing to be detected either via the voltage at the measurement shunt Rₛₕᵤₙₜ (when the dimmer switch is off) or via the supply input voltage signal which can be detected at the output of the bridge rectifier 3. The repetition rate for the bleed current activation should be sufficient to quickly detect when the dimmer is altered but low enough to keep dissipation inside the bleeding circuit 6, 6' at an acceptable level.

According to an alternative embodiment, a PWM signal with high frequency can be applied to the bleed switch (fig. 4) in order to limit the power dissipation. This can be tracked across the voltage time period to detect the phase cut position.

According to a further alternative, a bleeding circuit activation can be used for one cycle of the AC supply voltage and the average voltage can be used to predict the dimmer information. This can e.g. be performed every 10 cycles to limit the power dissipation in the bleeding circuitry.

Fig. 6 shows a further possible implementation of a bleeding circuit 6'' according to the present invention.

According to this embodiment the transistor Q5 detects the mains level via the resistor divider R32, R33 and R34. The transistor modulates the transistor Q4, which has a dual role as a current source for a bleeding circuit to support triac holding current and for signaling the bleed activity. In case that transistor Q4 is turned on and thus the bleeding circuit 6'' is active, the voltage above the transistor Q4 is pulled down and this can be used as a signal (Digital Vout) indicating the activity of the bleeding circuit. In case that transistor Q4 is turned off and thus the bleeding circuit 6'' is not active, the voltage above the transistor Q4 is pulled high by the resistor R40 and this can be used as a signal (Digital Vout) indicating the non-activity of the bleeding circuit. As described above, the bleeding circuit 6'' is selectively acting to draw a bleeding current in periods when the supply voltage amplitude is below a threshold value. The bleeding circuit 6'' is depending on the phase cut present in the AC supply voltage.

The signal (Digital Vout) indicating the non-activity of the bleeding circuit for this example is a kind of digital signal, as is has to be only checked whether the signal is high or low. This gives the advantage that this signal is less susceptible to noise in comparison to an analogue detection, where noise or disturbances would cause errors in the receipted signal.

The activation of the bleeding circuit 6, 6', 6'' may also be depending on the current out of the output of the first rectifier 3, i.e. flowing into the filter circuit 10 comprising. The bleed current would only be enabled when the current into the filter circuit 10 (or the actively switched PFC circuit 9 or the valley fill circuitry 8) would be below a given threshold.

The activity of the bleeding circuit 6'', however, alternatively or even additionally can also be sensed on the mains voltage line. The activity may be sensed on the resistor divider R32, R33 and R34, on base-terminal of the transistor Q5 detects the mains level.

## Claims

1. A dimmable LED module,
the LEd module being adapted to be dimmed using a dimmer controlling a phase cut of an AC supply voltage supplied to the LED module, the LED module
comprising:
a bleeding circuit (6) adapted to selectively draw a bleeding current in periods when the AC supply voltage amplitude is below a threshold value,
**characterized in that**
the LED further comprises a circuit (21) adapted to enable/disable the bleeding circuit (6) with a frequency which is higher than twice the frequency of the AC supply voltage.

2. The LED module of claim 1,
wherein the circuit (21) is designed to enable the bleeding circuit (6) with pulses, and
wherein the circuit (21) is designed to detect the position of any phase cut of the AC supply voltage by processing one or more samples of a bleeding activity signal, the one or more samples of the bleeding activity signal being gathered during a pulse enabling to the bleeding circuit (6),
the bleeding activity signal indicating an activity of the bleeding circuit (6).

3. The LED module of claim 2,
wherein the circuit (21) is designed to gather a first number of bleeding activity samples during a first half wave of the AC supply voltage, while it is desiged to gather a second number, smaller than the first number and preferably being 1, in at least one second half wave, immediately following the first half wave or not.

4. The LED module according to claims 2 or 3,
- wherein said circuit (21) is supplied with the bleeding activity signal indicating the activity of the bleeding circuit (6), the circuit (21) being designed to determine , based on the bleeding activity signal, a value representing the phase cut present in the AC supply voltage and issuing a control signal as a function of the value representing the phase cut present in the AC supply voltage, and
- wherein said circuit (21) is further adapted to supply said control signal to at least one driver circuit (11) so as to adjust the power supplied to associated LED lighting means (5).

5. The LED module of claim 4,
wherein the bleeding activity signal indicates directly or indirectly one of the bleeding current or a voltage across resistive means of the bleeding circuit (6).

6. The LED module of any of the preceding claims 2 to 5,
wherein the bleeding activity signal is a pulse signal.

7. The LED module according to claim 6,
wherein the circuit (21) is designed to determine the pulse width of the bleeding activity indication signal.

8. The LED module of any of the preceding claims 2 to 7, wherein the bleeding activity signal is produced for every cycle of the mains voltage or periodically.

9. The LED module of any of the preceding claims 2 to 8, wherein the circuit (21) is designed to obtain, based on the bleeding activity signal, the timing of the zero-crossings of the AC supply voltage as well as the timing of any phase cut of the AC supply voltage.

10. A LED module according to any of the preceding claims,
wherein the LED module further comprises a driver circuit (11) adapted to control power of LED lighting means via one or more of:
- low frequency PWM control, the PWM pulses having a frequency in the order of twice the frequency of the AC supply voltage, preferably with a frequency between 90 and 140 Hz, the PWM pulses being preferably synchronous with the bleeding activity indication signal,
- high frequency PWM control, the PWM pulses having a frequency of more than 200Hz, preferably more than 500Hz, and/or
- a control of an amplitude of a DC current through the LED lighting means.

11. The LED module according to claim 10,
wherein the supply potential of the LED lighting means (5) is isolated from the AC supply voltage by isolating means.

12. A retrofit LED lamp, comprising a LED module according to any of the preceding claims.

13. A method for operating a dimmable LED module, the LEd module being dimmed using a dimmer controlling the phase of an AC supply voltage supplied to the LED module, such as e.g. a dimmer having a triac, wherein:
a bleeding circuit (6) of the LED module selectively acts to draw a bleeding current in periods when the AC supply voltage amplitude is below a threshold value,
**characterized in that**
the bleeding circuit (6) is enabled/disabled with a frequency which is higher than twice the frequency of the AC supply voltage.

14. The method of claim 13,
wherein the enabling/disabling of the bleeding circuit (6) is performed by pulses, preferably PWM pulses, modulating a switch of the bleeding circuit (6).

## Patentansprüche

1. Dimmbares LED-Modul,
wobei das LED-Modul ausgelegt ist, um mittels eines Dimmers mit Phasenanschnittsteuerung einer Wechselstromversorgungsspannung, mit der das LED-Modul gespeist wird, gedimmt zu werden, wobei das LED-Modul umfasst:
eine Ableitungsschaltung (6), um selektiv einen Ableitungsstrom in Zeiträumen aufzunehmen wenn die Amplitude der Wechselstromversorgungsspannung unter einem Schwellenwert liegt, **dadurch gekennzeichnet, dass** die LED zudem eine Schaltung (21) umfasst, die ausgelegt ist, um die Ableitungsschaltung (6) mit einer Frequenz zu aktivieren/deaktivieren, die über das Doppelte der Frequenz der Wechselstromversorgungsspannung beträgt.

2. LED-Modul nach Anspruch 1, wobei die Schaltung (21) ausgestaltet ist, um die Ableitungsschaltung (6) mit Impulsen zu aktivieren und wobei die Schaltung (21) ausgestaltet ist, um die Position eines jeden Phasenanschnitts der Wechselstromversorgungsspannung zu erfassen, indem eine oder mehrere Proben eines Ableitungsaktivitätssignals verarbeitet werden, wobei die eine oder mehreren Proben des Ableitungsaktivitätssignals während eines Impulses gesammelt werden, der die Ableitungsschaltung (6) aktiviert, wobei das Ableitungsaktivitätssignal eine Aktivität der Ableitungsschaltung (6) angibt.

3. LED-Modul nach Anspruch 2, wobei die Schaltung (21) ausgestaltet ist, um eine erste Anzahl an Ableitungsaktivitätsproben während einer ersten Halbwelle der Wechselstromversorgungsspannung zu sammeln, wobei sie ausgestaltet ist, um eine zweite Anzahl zu sammeln, die geringer ist als die erste Anzahl und vorzugsweise 1 beträgt, und zwar in mindestens einer zweiten Halbwelle, die unmittelbar auf die erste Halbwelle folgt oder nicht.

4. LED-Modul nach Anspruch 2 oder 3,
- wobei die Schaltung (21) mit dem Ableitungsaktivitätssignal gespeist wird, das die Aktivität der Ableitungsschaltung (6) angibt, wobei die Schaltung (21) ausgestaltet ist, um basierend auf dem Ableitungsaktivitätssignal einen Wert zu bestimmen, der den in der Wechselstromversorgungsspannung enthaltenen Phasenanschnitt darstellt, sowie um ein Kontrollsignal als eine Funktion des Werts auszugeben, der den in der Wechselstromversorgungsspannung enthaltenen Phasenanschnitt darstellt, und
- wobei die Schaltung (21) zudem ausgelegt ist, um dieses Kontrollsignal mindestens an eine Antriebsschaltung (11) zu senden, sodass der Strom, mit dem verbundene LED-Beleuchtungsmittel (5) versorgt werden, justiert wird.

5. LED-Modul nach Anspruch 4, wobei das Ableitungsaktivitätssignal unmittelbar oder mittelbar entweder den Ableitungsstrom oder eine Spannung durch Widerstandsmittel der Ableitungsschaltung (6) angibt.

6. LED-Modul nach einem der Ansprüche 2 bis 5, wobei das Ableitungsaktivitätssignal ein Impulssignal ist.

7. LED-Modul nach Anspruch 6, wobei die Schaltung (21) ausgestaltet ist, um die Pulsweite des Ableitungsaktivitätsangabesignals zu bestimmen.

8. LED-Modul nach einem der Ansprüche 2 bis 7, wobei das Ableitungsaktivitätssignal für jeden Zyklus der Hauptspannung oder periodisch generiert wird.

9. LED-Modul nach einem der Ansprüche 2 bis 8, wobei die Schaltung (21) ausgestaltet ist, um basierend auf dem Ableitungsaktivitätssignal die Zeitvorgabe der Nullkreuzungen der Wechselstromversorgungsspannung sowie die Zeitvorgabe eines jeden Phasenanschnitts der Wechselstromversorgungsspannung zu erhalten.

10. LED-Modul nach einem der vorhergehenden Ansprüche, wobei das LED-Modul zudem eine Antriebsschaltung (11) umfasst, die ausgelegt ist, um die Leistung der LED-Beleuchtungsmittel zu steuern, und zwar mittels entweder
- Niederfrequenz-PWM-Steuerung, wobei die PWM-Impulse eine Frequenz aufweisen, die das Doppelte der Frequenz der Wechselstromversorgungsspannung beträgt, vorzugsweise mit einer Frequenz zwischen 90 und 140 Hz, wobei die PWM-Impulse vorzugsweise synchron mit dem Ableitungsaktivitätsangabesignal sind, und/oder
- Hochfrequenz-PWM-Steuerung, wobei die PWM-Impulse eine Frequenz von über 200 Hz aufweisen, vorzugsweise von über 500 Hz, und/oder
- einer Steuerung einer Amplitude eines Gleichstroms durch die LED-Beleuchtungsmittel.

11. LED-Modul nach Anspruch 10, wobei das Versorgüngspotenzial der LED-Beleuchtungsmittel (5) von der Wechselstromversorgungsspannung durch Isolationsmittel isoliert ist.

12. Nachgerüstete LED-Lampe, umfassend ein LED-Modul nach einem der vorhergehenden Ansprüche.

13. Verfahren für den Betrieb eines dimmbaren LED-Moduls, wobei das LED-Modul mittels eines Dimmers mit Phasenanschnittsteuerung einer Wechselstromversorgungsspannung, mit der das LED-Modul gespeist wird, gedimmt wird, wie z. B. eines Dimmers, aufweisend einen Triac, wobei:
eine Ableitungsschaltung (6) des LED-Moduls selektiv wirkt, um einen Ableitungsstrom in Zeiträumen aufzunehmen, wenn die Amplitude der Wechselstromversorgungsspannung unter einem Schwellenwert liegt,
**dadurch gekennzeichnet, dass** die Ableitungsschaltung (6) mit einer Frequenz aktiviert/deaktiviert wird, die über das Doppelte der Frequenz der Wechselstromversorgungsspannung beträgt.

14. Verfahren nach Anspruch 13, wobei das Aktivieren/Deaktivieren der Ableitungsschaltung (6) durch Impulse, vorzugsweise PWM-Impulse, durchgeführt wird, die einen Schalter der Ableitungsschaltung (6) regeln.

## Revendications

1. Module DEL à intensité variable,
le module DEL étant adapté pour être atténué en utilisant un gradateur contrôlant une coupure de phase d'une tension d'alimentation de courant alternatif fournie au module DEL, le module DEL comprenant :
un circuit de stabilisation (6) prévu pour sélectivement absorber un courant de stabilisation dans des périodes où l'amplitude de la tension d'alimentation de courant alternatif est inférieure à une valeur seuil,
**caractérisé en ce que** la DEL comprend de plus un circuit (21) apte à activer/désactiver le circuit de stabilisation (6) avec une fréquence étant supérieure à deux fois la fréquence de la tension d'alimentation de courant alternatif.

2. Module DEL selon la revendication 1, dans lequel le circuit (21) est conçu pour activer le circuit de stabilisation (6) avec des impulsions, et dans lequel le circuit (21) est conçu pour détecter la position de toute coupure de phase de la tension d'alimentation de courant alternatif en traitant un ou plusieurs échantillons d'un signal d'activité de stabilisation, l'un ou plusieurs échantillons du signal d'activité de stabilisation étant recueillis lors d'une impulsion activant le circuit de stabilisation (6), le signal d'activité de stabilisation indiquant une activité du circuit de stabilisation (6).

3. Module DEL selon la revendication 2, dans lequel le circuit (21) est conçu pour recueillir un premier nombre d'échantillons d'activité de stabilisation lors d'une première demi-onde de tension d'alimentation de courant alternatif, tandis qu'il est conçu pour recueillir un second nombre, inférieur au premier nombre et de préférence égal à 1, dans au moins une seconde demi-onde, suivant immédiatement ou non la première demi-onde.

4. Module DEL selon les revendications 2 ou 3,
- dans lequel ledit circuit (21) est alimenté par le signal d'activité de stabilisation indiquant l'activité du circuit de stabilisation (6), le circuit (21) étant conçu pour déterminer, en fonction du signal d'activité de stabilisation, une valeur représentant la coupure de phase présente dans la tension d'alimentation de courant alternatif et délivrant un signal de contrôle en fonction de la valeur représentant la coupure de phase présente dans la tension d'alimentation de courant alternatif, et
- dans lequel ledit circuit (21) est de plus adapté pour fournir ledit signal de contrôle à au moins un circuit d'attaque (11) de sorte à ajuster la puissance fournie au moyen d'éclairage de DEL associé (5).

5. Module DEL selon la revendication 4, dans lequel le signal d'activité de stabilisation indique directement ou indirectement soit le courant de stabilisation ou une tension traversant des moyens résistifs du circuit de stabilisation (6).

6. Module DEL selon l'une quelconque des revendications précédentes de 2 à 5, dans lequel le signal d'activité de stabilisation est un signal à impulsions.

7. Module DEL selon la revendication 6, dans lequel le circuit (21) est conçu pour déterminer la largeur d'impulsion du signal d'indication d'activité de stabilisation.

8. Module DEL selon l'une quelconque des revendications précédentes de 2 à 7, dans lequel le signal d'activité de stabilisation est produit pour tous les cycles de tension de secteur ou périodiquement.

9. Module DEL selon l'une quelconque des revendications précédentes de 2 à 8, dans lequel le circuit (21) est conçu pour obtenir, en fonction du signal d'activité de stabilisation, le timing des passages par zéro de la tension d'alimentation de courant alternatif ainsi que le timing de toutes coupures de phase de la tension d'alimentation alternative.

10. Module DEL selon l'une quelconque des revendications précédentes, dans lequel le module DEL comprend de plus un circuit d'attaque (11) apte à contrôler la puissance du moyen d'éclairage de DEL selon l'un ou plusieurs des moyens suivants :
- contrôle de la modulation d'impulsions en largeur basse fréquence, les impulsions MIL ayant une fréquence de l'ordre du double de la fréquence de la tension d'alimentation de courant alternatif, de préférence avec une fréquence comprise entre 90 et 140 Hz, les impulsions MIL étant de préférence synchrones avec le signal d'indication d'activité de stabilisation,
- contrôle de la modulation d'impulsions en largeur haute fréquence, les impulsions MIL ayant une fréquence de plus de 200 Hz, de préférence de plus de 500 Hz, et/ou
- un contrôle d'une amplitude d'un courant continu à travers le moyen d'éclairage de DEL.

11. Module DEL selon la revendication 10, dans lequel le potentiel d'alimentation du moyen d'éclairage de DEL (5) est isolé de la tension d'alimentation de courant alternatif par le biais de moyens d'isolement.

12. Amélioration d'une lampe à DEL, comprenant un module DEL selon l'une quelconque des revendications précédentes.

13. Procédé servant à faire fonctionner un module DEL à intensité variable, le module DEL étant atténué en utilisant un gradateur, contrôlant la phase d'une tension d'alimentation de courant alternatif fournie au module DEL, comme par exemple un gradateur ayant un triac, dans lequel :
un circuit de stabilisation (6) du module DEL agit sélectivement pour absorber un courant de stabilisation dans des périodes où l'amplitude de la tension d'alimentation de courant alternatif est inférieure à une valeur seuil,
**caractérisé en ce que** le çircuit de stabilisation (6) est activé/désactivé avec une fréquence étant supérieure à deux fois la fréquence de la tension d'alimentation alternative.

14. Procédé selon la revendication 13, dans lequel l'activation/désactivation du circuit de stabilisation (6) est effectuée par des impulsions, de préférences par des impulsion MIL, modulant un interrupteur du circuit de stabilisation (6).
